# EUROPÄISCHE PATENTSCHRIFT

(11) **EP 3 005 445 B1**
(45) Veröffentlichungstag und Bekanntmachung des Hinweises auf die Patenterteilung: **12.07.2017**
(21) Anmeldenummer: 14728896.3
(22) Anmeldetag: 28.05.2014
(51) Int. Cl.: H01M 2/12

(54) **VERSCHLUSSSTOPFENANORDNUNG, GEHÄUSE UND AKKUMULATOR**
SEALING PLUG ARRANGEMENT, HOUSING AND RECHARGEABLE BATTERY
ENSEMBLE BOUCHON DE FERMETURE, BOÎTIER ET ACCUMULATEUR

(30) Priorität: 29.05.2013 DE 102013105511
(43) Veröffentlichungstag der Anmeldung: 13.04.2016
(73) Patentinhaber: Johnson Controls Autobatterie GmbH & Co. KGaA, 30419 Hannover (DE)
(72) Erfinder: KOCH, Ingo, 31789 Hameln (DE); STAFFELDT, Armin, 27389 Lauenbrück (DE)
(74) Vertreter: Trinks, Ole
(86) Internationale Anmeldenummer: PCT/EP2014/061171
(87) Internationale Veröffentlichungsnummer: WO 2014/191517

(56) Entgegenhaltungen:
- DE-A1-102007 061 784
- DE-A1-102008 009 864
- US-A- 5 258 243
- US-B1- 6 528 202

## Beschreibung

Die Erfindung betrifft eine Verschlussstopfenanordnung zum Verschließen einer kombinierten Befüllungs- und Entgasungsöffnung eines Akkumulators gemäß dem Oberbegriff des Anspruchs 1. Die Erfindung betrifft außerdem ein Gehäuse eines Akkumulators gemäß Anspruch 9 sowie einen Akkumulator gemäß Anspruch 11.

Allgemein betrifft die Erfindung das Gebiet elektrochemischer Akkumulatoren mit flüssigem Elektrolyten, z. B. Blei-Säure-Akkumulatoren. Das Gehäuse des Akkumulators weist im Allgemeinen einen in mehrere Kammern unterteilten Gehäuseraum auf, in dem der flüssige Elektrolyt vorgesehen ist. Je nach Ausführungsform des Akkumulators kann der flüssige Elektrolyt in einem Vliesmaterial aufgenommen und damit gebunden sein. Zur Befüllung des Gehäuses mit dem flüssigen Elektrolyten ist wenigstens eine Gehäuseöffnung als Befüllungsöffnung vorgesehen. Die Befüllungsöffnung muss für einen praktischen Betrieb des Akkumulators abgedichtet verschließbar sein, um einen unerwünschten Austritt von Säure zu vermeiden und einen gewissen - wenn auch geringen - Überdruck im Akkumulatorgehäuse zu halten. Zur Sicherung des Akkumulators gegen einen unerwünscht hohen Überdruck im Gehäuse ist es vorteilhaft, eine Überdrucksicherung vorzusehen, die bei zu hohem Druck einen Auslass von Gas aus dem Gehäuse erlaubt, z. B. über die Befüllungsöffnung, die dann eine kombinierte Befüllungs- und Entgasungsöffnung ist.

Für die Abdichtung der kombinierten Befüllungs- und Entgasungsöffnung wird bei bekannten Akkumulatoren eine Verschlussstopfenanordnung vorgesehen, die wenigstens ein Ventilteil, einen Ventilhalter und einen Verschlussstopfen aufweist. Entsprechende Vorschläge sind z. B. aus der WO 2010/124684 A2, der DE 10 2007 061 784 A1 oder der DE 10 2009 041 417 A1 bekannt.

Der Erfindung liegt die Aufgabe zugrunde, eine verbesserte Verschlussstopfenanordnung anzugeben, die einfacher herzustellen ist und dennoch sehr zuverlässig ist. Ferner soll ein entsprechendes Gehäuse und ein entsprechender Akkumulator angegeben werden.

Diese Aufgabe wird gemäß Anspruch 1 gelöst durch eine Verschlussstopfenanordnung zum Verschließen einer kombinierten Befüllungs- und Entgasungsöffnung eines Akkumulators, wobei die Verschlussstopfenanordnung wenigstens ein Ventilteil, einen Ventilhalter und einen Verschlussstopfen aufweist, wobei das Ventilteil auf dem Ventilhalter angeordnet ist und mit dem Ventilhalter eine bei Druckbeaufschlagung öffenbare Ventileinrichtung zur Abdichtung wenigstens eines Innenraums des Akkumulators gegenüber der Umgebung bildet, wobei der Verschlussstopfen wenigstens ein Befestigungsmittel zur Befestigung an der Befüllungs- und Entgasungsöffnung aufweist und zugleich das Ventilteil gegenüber dem Ventilhalter mit einer Vorspannkraft beaufschlagt, wobei der Ventilhalter an einer zu dem Ventilteil weisenden Fläche wenigstens einen als umlaufende Dichtkante ausgebildeten, in Axialrichtung zum Ventilteil hin hervorstehenden Fortsatz aufweist, auf dem das Ventilteil aufliegt. Die Erfindung hat den Vorteil, dass die Dichtkante als Teil des Ventilhalters ausgebildet ist und damit direkt aus dem Material des Ventilhalters hergestellt werden kann. Dies erlaubt eine einfache, kostengünstige Herstellung der Verschlussstopfenanordnung, da die Erzeugung der Dichtkante direkt in den Herstellprozess des Ventilhalters integriert werden kann und dabei keine Zusatzkosten verursacht. Als Konsequenz kann dann das Ventilteil derart ausgebildet sein, dass es in einem Anlagebereich, in dem es am Ventilhalter anliegt, keine axial hervorstehende Dichtlippe aufweist. Insbesondere kann das Ventilteil ganz ohne hervorstehende Dichtlippe hergestellt werden. Dies vereinfacht wiederum die Herstellung des Ventilteils. Da das Ventilteil häufig aus einem gummielastischem Material hergestellt ist, können auf diese Weise die Herstellkosten reduziert werden, da das präzise Herstellen einer Dichtlippe an einem gummielastischem Bauteil aufwendiger ist als an einem Bauteil wie dem Ventilhalter, der häufig nicht aus einem gummielastischem Material, sondern aus einem härterem Material wie z. B. einem Kunststoffmaterial, z. B. Polypropylen, hergestellt wird.

Mit der Erfindung werden zudem die Kosten für die Qualitätssicherung und die Prüfung von Akkumulatoren reduziert, da bei der Fertigung des Ventilteils aus gummielastischem Material die Ausschusszahlen reduziert werden können. Bei einer Fertigung des Ventilteils mit einer angeformten Dichtlippe ist das Risiko von Fehlstellen relativ groß. Durch Fortlassen der am Ventilteil angeformten Dichtlippe wird, wie erwähnt, der Ausschuss verringert.

Auf diese Weise kann auch die Dauerbetriebsfestigkeit des Akkumulators verbessert werden, einerseits dadurch, dass das Risiko von nicht erkannten Fehlstellen an der am Ventilteil angeformten Dichtlippe eliminiert ist. Zusätzlich wird die Dauerhaltbarkeit des Akkumulators dadurch erhöht, dass die Dichtkante aus dem Material des Ventilhalters, z. B. aus einem härteren Kunststoffmaterial, hergestellt werden kann. Hierdurch kann die Lebensdauer der Dichtkante und deren Abdichtwirkung im Vergleich zu einer gummielastischen Dichtlippe am Ventilteil erhöht werden. Die Dichtung zwischen dem Ventilteil und dem Ventilhalter ist nämlich dem Angriff von Säure aus dem Akkumulator ausgesetzt, der von zwei Seiten er-folgen kann. Hiergegen sind gummielastische Materialien empfindlicher als härtere Kunststoffmaterialien.

Das wenigstens eine Befestigungsmittel des Verschlussstopfens kann z. B. als Außengewinde ausgebildet sein, das in ein entsprechendes Innengewinde der Befüllungs- und Entgasungsöffnung eingeschraubt werden kann. Es können auch andere Befestigungsmittel vorgesehen sein, z. B. Schnappbefestigungsmittel oder Rastmittel, wie z. B. Rasthaken.

Die erfindungsgemäße Verschlussstopfenanordnung eignet sich insbesondere für Akkumulatoren mit einem Gehäuse, dessen Oberteil einen Blockdeckel aufweist, in dem einer oder mehrere Entgasungskanäle gebildet sind. Vorteilhaft ist die Verschlussstopfenanordnung dann sowohl gegenüber einem Oberteil als gegenüber einem Unterteil des Blockdeckels abgedichtet, so dass der oder die dazwischen liegenden Entgasungskanäle nach oben und nach unten hin auch im Be-reich der Verschlussstopfenanordnung abgedichtet sind. Die Abdichtung der Verschlussstopfenanordnung kann dadurch realisiert werden, dass der Verschlussstopfen einen jeweiligen Dichtring zur Abdichtung gegenüber dem Oberteil und
dem Unterteil des Blockdeckels aufweist. Der jeweilige Dichtring kann als Radialdichtring oder als Axialdichtring ausgebildet sein.

Gemäß einer vorteilhaften Weiterbildung der Erfindung weist der Verschlussstopfen in dem axialen Bereich zwischen der Abdichtung gegenüber dem Oberteil und der Abdichtung gegenüber dem Unterteil wenigstens eine Entgasungsöffnung auf. Vorteilhaft ist die Entgasungsöffnung des Verschlussstopfens dann derart angeordnet, dass sie mit einem im Blockdeckel gebildeten Entgasungskanal in direktem Kontakt ist und mittels der Ventileinrichtung einen definierten Gasaustritt über die Entgasungsöffnung des Verschlussstopfens in den Entgasungskanal erlaubt.

Gemäß einer vorteilhaften Weiterbildung der Erfindung ist daher vorgesehen, dass das Ventilteil in dem Anlagebereich, in dem es am Ventilhalter anliegt, keine axial hervorstehende Dichtlippe aufweist. Gemäß einer vorteilhaften Weiterbildung der Erfindung ist der Fortsatz des Ventilhalters aus einem härteren Material gebildet als das Material des Ventilteils. Insbesondere kann der Fortsatz aus dem Material des Ventilhalters gebildet sein. Dieser kann aus einem Kunststoffmaterial, z. B. einem harten Kunststoffmaterial wie Polypropylen, hergestellt sein. Das Ventilteil kann z.B. aus Gummi hergestellt sein.

Gemäß einer vorteilhaften Weiterbildung der Erfindung weist das Ventilteil einen Fortsatz auf, der in einem inneren Hohlraum des Ventilhalters angeordnet ist und als Halteabschnitt zum Halten des Ventilteils in bzw. an dem Ventilhalter fungiert. Dies erlaubt eine sichere Halterung des Ventilteils in dem Ventilhalter sowie eine einfache und zuverlässige Zentrierung des Ventilteils gegenüber dem Ventilhalter.

Gemäß einer vorteilhaften Weiterbildung der Erfindung ist der Innendurchmesser des Ventilhalters zumindest in dem Bereich des inneren Hohlraums, der zur Aufnahme des Halteabschnitts des Ventilteils ausgebildet ist, größer - zumindest geringfügig größer - als der Außendurchmesser des Halteabschnitts. Hierdurch wird das Ventilteil mit etwas Spiel im Ventilhalter gehalten, was eine gewisse Relativbewegung zwischen dem Halteabschnitt und dem Ventilhalter ermöglicht. Bei hohem Gasdruck im Innenraum des Akkumulators erfolgt nämlich eine gewisse Kompression des oberen Bereichs des Ventilteils, d. h. des außerhalb des hohlen Bereichs des Ventilhalters vorgesehenen Ventilteil-Bereichs, so dass sich der Halteabschnitt gegenüber dem Ventilhalter geringfügig nach oben hin verschiebt.

Durch das Spiel kann sich das Ventilteil nach Verringerung des Gasdrucks wieder ausdehnen und in seine ursprüngliche Position zurückkehren. Hierdurch kann eine erneute Abdichtung durch das Ventilteil bzw. die Dichtwulst definiert gewährleistet werden.

Gemäß einer vorteilhaften Weiterbildung der Erfindung verjüngt sich der Querschnitt des inneren Hohlraums des Ventilhalters in axialer Richtung zum Ventilteil hin. Der sich verjüngende Bereich kann insbesondere rotationssymmetrisch ausgebildet sein. Der sich verjüngende Bereich kann insbesondere in dem axialen Endbereich des Ventilhalters angeordnet sein, in dem das Ventilteil auf dem Ventilhalter angeordnet ist. Dies hat den Vorteil, dass für das Ventilteil an einer oberen Auflagefläche des Ventilhalters mehr Platz als Auflagefläche zur Verfügung steht als bei bekannten Verschlussstopfenanordnungen. Zudem kann das seitliche Spiel für das Ventilteil verringert werden.

Der Ventilhalter kann an seinem Innenumfang rippenförmige Erhebungen aufweisen, zwischen den sich in Axialrichtung erstreckende Zwischenräume vorhanden sind. Durch diese Zwischenräume werden Strömungskanäle für austretendes Gas gebildet. Die rippenförmigen Erhebungen können insbesondere in dem zuvor erwähnten sich verjüngenden Innenbereich des Ventilhalters angeordnet sein.

Gemäß einer vorteilhaften Weiterbildung der Erfindung weist das Ventilteil einen Kragen auf, der einen Anschlag beim Einsetzen des Ventilteils in den Ventilhalter bildet. Dies erlaubt vorteilhaft ein einfaches Einsetzen des Ventilteils in den Ventilhalter, wobei mit wenig Aufwand das Ventilteil korrekt positioniert werden kann. Der Kragen kann beispielsweise vollständig umlaufend um einen Zentralabschnitt des Ventilteils angeordnet sein und auf diese Weise für eine Abdichtung der Befüllungs- und Entgasungsöffnung sorgen

Gemäß einer vorteilhaften Weiterbildung der Erfindung weist das Ventilteil an seiner von dem Ventilhalter abgewandten Seite einen Überdrucksicherungsbereich mit einer Aussparung auf. Durch die Aussparung ist das Material des Ventilteils im Bereich des Überdrucksicherungsbereichs geschwächt, wodurch es leichter verformbar ist. Hierdurch kann ein definiertes Öffnen der Ventileinrichtung bei einem vorgegebenen Überdruck sichergestellt werden. Die Aussparung kann vorteilhaft direkt bei der Herstellung des Ventilteils durch entsprechende Formung des Materials hergestellt werden, z. B. durch geeignete Formgebung beim Vulkanisieren.

Alternativ kann die Aussparung durch Abtragung von Material an dem Ventilteil in einem weiteren Bearbeitungsschritt erfolgen, z. B. mit einem spanenden Verfahren. Das Vorsehen der Aussparung auf der von dem Ventilhalter abgewandten Seite, d. h. auf der Seite, auf der der Gasdruck nicht ansteht, hat den Vorteil, dass die Formgebung und Größe der Aussparung den Strömungsquerschnitt für austretendes Gas bei Ansprechen der Überdrucksicherung nicht beeinflussen. Hierdurch kann die Überdrucksicherungsfunktion hinsichtlich des Ansprechdrucks über die Formgebung und Größe der Aussparung einfacher und gezielter den hierfür vorliegenden Anforderungen angepasst werden.

Gemäß einer vorteilhaften Weiterbildung der Erfindung weist die Aussparung in einer Draufsicht auf das Ventilteil eine im Wesentlichen lineare oder teilkreisförmige Kontur auf. Dies erlaubt eine einfache Herstellung der Aussparung.

Gemäß einer vorteilhaften Weiterbildung der Erfindung weist das Ventilteil im Bereich des Überdrucksicherungsbereichs eine Stelle mit erhöhter Flexibilität auf. Die Stelle mit erhöhter Flexibilität kann je nach Ausgestaltung des Ventilteils zusätzlich oder alternativ zu der zuvor erläuterten Aussparung vorgesehen werden. Die Stelle mit erhöhter Flexibilität erlaubt es, die Parameter für die Überdrucksicherungsfunktion nach Bedarf präzise vorzusehen, wie z. B. den Öffnungsdruck oder den Öffnungsquerschnitt der Ventileinrichtung in Abhängigkeit vom Überdruck.

Die Stelle mit erhöhter Flexibilität kann z. B. durch Vorsehen einer Materialschwächung des Materials des Ventilteils realisiert werden.

Gemäß einer vorteilhaften Weiterbildung der Erfindung besteht das Ventilteil ganz oder teilweise aus gummielastischem Material. Vorteilhaft wird dabei insbesondere im Überdrucksicherungsbereich gummielastisches Material verwendet. Auf diese Weise kann die Überdrucksicherung fertigungstechnisch mit wenig Aufwand vorgesehen werden, insbesondere ohne zusätzliche Gelenke oder Scharniere.

Gemäß einer vorteilhaften Weiterbildung der Erfindung weist der Verschlussstopfen eine innere Kammer zur Aufnahme des Ventilteils und des Ventilhalters auf. Dies hat den Vorteil, dass der Ventilhalter über eine relativ große Distanz durch den rohrförmigen Fortsatz gehalten und gestützt werden kann. Hierdurch lässt sich eine robuste mechanische Fixierung des Ventilhalters an dem Verschlussstopfen realisieren.

Gemäß einer vorteilhaften Weiterbildung der Erfindung weist der Verschlussstopfen an seinem von der Anordnung aus Ventilteil und Ventilhalter abgewandten Endbereich eine Wand auf, die den Innenraum des Akkumulators zur Umgebung hin abdichtet, ggf. durch Hinzunahme einer Dichtung, wenn die Verschlussstopfenanordnung in die Befüllungs- und Entgasungsöffnung eingesetzt ist. Dies hat den Vorteil, dass mittels des Verschlussstopfens das Akkumulatorgehäuse an seiner Außenseite komplett durch die Verschlussstopfen abgedichtet werden kann, so dass über die Befüllungs- und Entgasungsöffnungen weder flüssiger Elektrolyt noch entstehendes Gas direkt in die Umgebung entweichen kann. Entstehendes Gas kann höchstens über einen Entgasungskanal zu einer definierten Stelle des Gehäuses geführt werden, an der eine Gasauslassöffnung vorgesehen ist, die in der Regel mit einem Rückzündschutz versehen ist. Aus den einzelnen Befüllungs- und Entgasungsöffnungen kann aber nicht direkt Gas ins Freie entweichen.

Die zuvor erwähnte Wand hat noch weitere wesentliche Funktionen neben der zuvor erläuterten Abdichtfunktion. Die Wand dient zum Aufnehmen eines Drehmoments bei der Befestigung der Verschlussstopfenanordnung in der Befüllungs- und Entgasungsöffnung über ein Mitnahmeprofil und zum Aufnehmen von Kräften, um eine Gegenkraft zur Befestigungskraft des Befestigungsgewindes zu bilden.

Die eingangs genannte Aufgabe wird ferner gemäß Anspruch 9 gelöst durch ein Gehäuse eines Akkumulators mit einem kastenförmigen Gehäuseunterteil und einem als Deckel des Gehäuses dienenden, auf das Gehäuseunterteil aufsetzbaren oder aufgesetzten Gehäuseoberteil, wobei das Gehäuseoberteil wenigstens eine kombinierte Befüllungs- und Entgasungsöffnung des Akkumulators aufweist, die mit einer Verschlussstopfenanordnung der zuvor beschriebenen Art verschlossen ist.

Gemäß einer vorteilhaften Weiterbildung der Erfindung weist das Gehäuseoberteil wenigstens einen in dem Gehäuseoberteil zu wenigstens einer Gasauslassöffnung des Gehäuses verlaufenden Entgasungskanal auf, wobei die Gasauslassöffnung von der kombinierten Befüllungs- und Entgasungsöffnung beabstandet ist.

Die eingangs genannte Aufgabe wird ferner gemäß Anspruch 11 gelöst durch einen Akkumulator mit einem Gehäuse der zuvor angegebenen Art.

Die Erfindung wird nachfolgend anhand von Ausführungsbeispielen unter Verwendung von Zeichnungen näher erläutert.

Es zeigen:
- Figur 1: eine in einem Gehäuseoberteil eines Gehäuses eines Akkumulators eingesetzte Verschlussstopfenanordnung in seitlicher Schnittansicht und
- Figur 2: einen Ventilhalter und ein Ventilteil in seitlicher Schnittansicht und
- Figur 3: ein Ventilteil in isometrischer Darstellung und
- Figur 4: ausschnittsweise einen Akkumulator in seitlicher Schnittdarstellung.

In den Figuren werden gleiche Bezugszeichen für einander entsprechende Elemente verwendet.

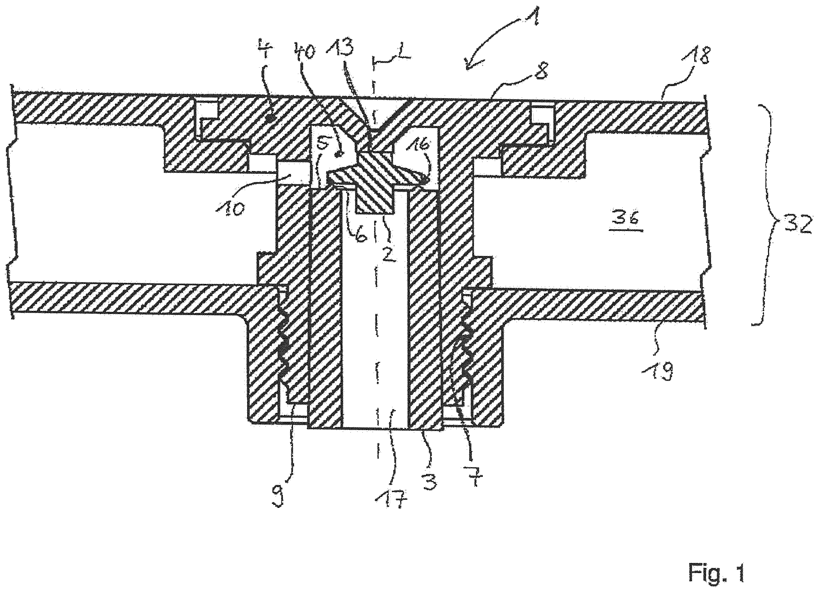

Die Figur 1 zeigt eine Verschlussstopfenanordnung 1 in seitlicher Schnittdarstellung. Erkennbar sind ein Ventilteil 2, ein Ventilhalter 3 und ein Verschlussstopfen 4. Der Ventilhalter 3 ist im Wesentlichen rohrförmig ausgebildet, z.B. mit kreisringförmigem Querschnitt, und weist einen inneren Hohlraum 17 auf, in dem ein Halteabschnitt des Ventilteils 2 angeordnet ist. Das Ventilteil 2 bildet mit einem auf einer Oberseite 5 des Ventilhalters 3 angeordneten Fortsatz 6 eine Ventileinrichtung 16, die ab einem gewissen Überdruck in dem Hohlraum 17 öffnet. Der Hohlraum 17 ist bei in einer Befüllungs- und Entgasungsöffnung des Akkumulators eingesetzter Verschlussstopfenanordnung mit dem Inneren des Akkumulators verbunden.

Der Verschlussstopfen 4 weist an seiner Oberseite, die zur Außenseite des Akkumulators gerichtet ist, eine Wand 8 auf, die vollständig flüssigkeits- und gasdicht ist. Der Verschlussstopfen 4 weist ferner an seiner von der Wand 8 abgewandten Seite, die zum Inneren des Akkumulators weist, einen sich in Axialrichtung erstreckenden rohrförmigen Fortsatz 9 auf. Der rohrförmige Fortsatz 9 dient zur Aufnahme und Befestigung des Ventilhalters 3, der in eine innere Kammer 40 des rohrförmigen Fortsatzes 9 eingesetzt ist.

Die Wand 8 weist ein Mitnahmeprofil auf, über das die Verschlussstopfenanordnung 1 in das Gewinde der Befüllungs- und Entgasungsöffnung einschraubbar ist. Die Wand 8 liegt dann am Oberdeckel 18 auf und nimmt die vom Gewinde erzeugten Befestigungskräfte auf. Die Wand 8 dichtet zudem den Innenraum des Akkumulators gegenüber der Umgebung ab. Hierfür können zwischen der Wand 8 und dem Oberdeckel 18 eine oder mehrere Dichtungen vorhanden sein, z. B. in Form von Abdichtringen, die an oder unter dem die Wand bildenden Kopf des Verschlussstopfens 4 angespritzt sind.

Die Figur 1 zeigt ferner, dass die Verschlussstopfenanordnung 1 in einem als Blockdeckel ausgebildeten Gehäuseoberteil 32 eines Akkumulators eingesetzt ist. Das Gehäuseoberteil 32 weist ein Oberteil 18 und ein Unterteil 19 auf, die zu dem genannten Blockdeckel miteinander verbunden sind. Zwischen dem Oberteil 18 und dem Unterteil 19 sind ein oder mehrere Entgasungskanäle 36 gebildet, durch die in dem Akkumulator entstehendes Gas zu einer Gasauslassöffnung des Akkumulatorgehäuses gelangen können. Die Verschlussstopfenanordnung 1 bzw. dessen Verschlussstopfen 4 weist eine Entgasungsöffnung 10 auf, die mit dem Entgasungskanal 36 in Verbindung steht. Bei entsprechendem Überdruck im Inneren des Akkumulators können Gase über den Hohlraum 17 durch die Ventileinrichtung 16 hindurch austreten und gelangen dann zu der Entgasungsöffnung 10, von wo aus sie über die Entgasungskanäle 36 abgeleitet werden können.

Als Befestigungsmittel zur Befestigung an dem Gehäuseoberteil 32 weist der Verschlussstopfen 4 ein Außengewinde 7 auf, das in ein entsprechendes Innengewinde des Gehäuseoberteils 32, z.B. in dem Unterteil 19, eingeschraubt werden kann.

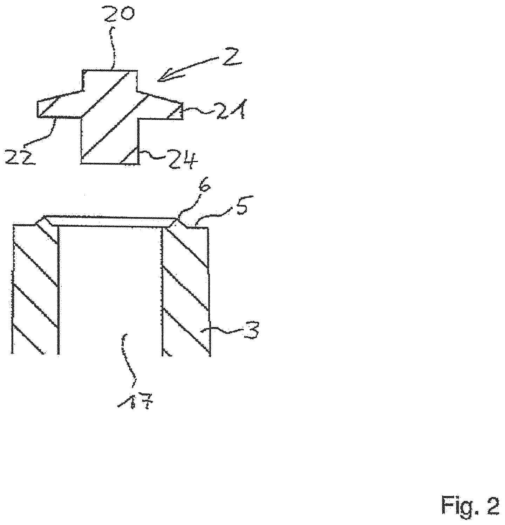

Der Verschlussstopfen 4 weist als weiteres Element eine Ventilbeaufschlagungsfläche 13 auf, die z. B. an einem inneren Fortsatz angeordnet sein kann, wie in der Figur 1 ersichtlich ist. Die Ventilbeaufschlagungsfläche 13 dient dazu, eine mit der Ventilbeaufschlagungsfläche 13 in Kontakt stehende obere Fläche eines Beaufschlagungsfortsatzes 20 des Ventilteils 2 mit einer gewissen Vorspannkraft gegenüber dem Ventilhalter 3 zu beaufschlagen, so dass die Ventileinrichtung 16 erst ab einem gewissen Mindestdruck oberhalb des Atmosphärendrucks öffnet. Wie in Figur 1 erkennbar ist, weist der Ventilhalter 3 an seiner zum Ventilteil 2 gerichteten Axialseite 5 den Fortsatz 6 auf. Der Fortsatz 6 ist als um den axialen Bereich 5 umlaufende Dichtkante ausgebildet, wie insbesondere durch die Figur 2 deutlich wird. In der Figur 1 ist erkennbar, dass das Ventilteil 2 mit der Unterseite 22 eines Kragens 21 auf dem Fortsatz 6 aufliegt und damit eine Dichtung und zugleich die Ventileinrichtung 16 bildet.

Die Figur 2 zeigt ausschnittsweise den oberen Teil des Ventilhalters 3 sowie das Ventilteil 2, bevor es mit dem Ventilhalter 3 in Kontakt gebracht ist.

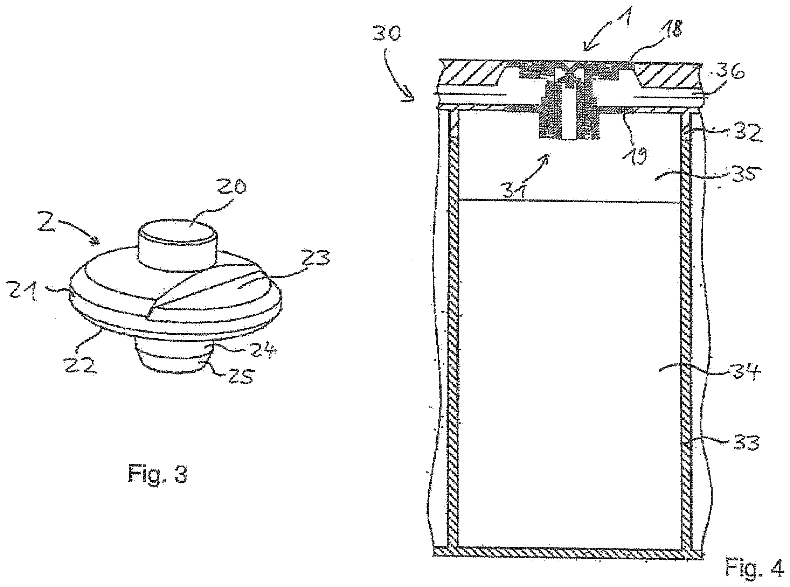

Ferner zeigt die Figur 3 beispielhaft ein Ventilteil 1 in vergrößerter isometrischer Darstellung. Erkennbar ist, dass das Ventilteil 1 an seiner zur Ventilbeaufschlagungsfläche 13 des Verschlussstopfens 4 hin gewandten Seite einen z. B. zylindrischen Beaufschlagungsfortsatz 20 aufweist. An diesen schließt sich ein Bereich mit größerem Querschnitt an, der als Kragen 21 bezeichnet wird. Der Kragen 21 weist an seiner Unterseite 22 keine Dichtlippe auf. Das Ventilteil 1 weist unterhalb des Kragens 21 einen Halteabschnitt 24 auf, der wie in Figur 1 ersichtlich in dem Ventilhalter 3 angeordnet wird. Der Halteabschnitt 24 kann zylindrisch ausgebildet sein und zum unteren Ende des Ventilteils 1 hin in einen konischen Abschnitt 25 übergehen. Der konische Abschnitt 25 dient als Einführschräge und erleichtert das Einführen des Ventilteils 1 in den hohlen Bereich 17 des Ventilhalters 3.

Um eine Ventilfunktion mit definierter Druckansprechschwelle zu realisieren, kann das Ventilteil 1 an der Oberseite des Kragens 21 eine Aussparung 23 aufweisen. Durch die Aussparung 23 wird die Materialstärke des Kragens 21 in diesem Bereich verringert, so dass sich eine Stelle mit erhöhter Flexibilität ergibt. In Folge dessen kann sich der Kragen 21 im Bereich der Aussparung 23 durch den anstehenden Gasdruck leichter verformen als die übrigen Abschnitte des Kragens 21.

Die Figur 4 zeigt ausschnittsweise in seitlicher Schnittdarstellung einen Akkumulator 30 mit einem Gehäuse, das das Gehäuseoberteil 32 und ein Gehäuseunterteil 33 aufweist. Der dargestellte Ausschnitt zeigt eine Akkumulatorzelle. Die Akkumulatorzelle weist einen Gehäuseraum 34, 35 auf, der zur Aufnahme von flüssigem Elektrolyten dient. Im oberen Bereich des Gehäuseraums 34, 35 ist ein Gasraum 35 vorgesehen. Im unteren Bereich 34 befindet sich der flüssige Elektrolyt. In dem Gehäuseoberteil 32 ist eine kombinierte Befüllungs- und Entgasungsöffnung 31 vorhanden, in der eine Verschlussstopfenanordnung 1 der zuvor beschriebenen Art eingesetzt ist. Die Verschlussstopfenanordnung 1 ist über das Außengewinde 7 in ein entsprechendes Innengewinde der Befüllungs- und Entgasungsöffnung 31 eingeschraubt. Wenn sich in dem Gasraum 35 Gas ansammelt und einen gewissen Überdruck überschreitet, öffnet die Ventileinrichtung 16. Hierdurch kann überschüssiges Gas über den inneren Hohlraum 17, die Ventileinrichtung 16 und die Entgasungsöffnung 10 des Verschlussstopfens 4 in einen Entgasungskanal 36 gelangen, der in dem Gehäuseoberteil 32 gebildet ist. Der Entgasungskanal 36 ist mit einer Gasauslassöffnung des Gehäuses 32, 33 verbunden, die wiederum mit der Umgebung verbunden ist.

## Patentansprüche

1. Verschlussstopfenanordnung (1) zum Verschließen einer kombinierten Befüllungs- und Entgasungsöffnung (31) eines Akkumulators (30), wobei die Verschlussstopfenanordnung (1) wenigstens ein Ventilteil (2), einen Ventilhalter (3) und einen Verschlussstopfen (4) aufweist, wobei das Ventilteil (2) auf dem Ventilhalter (3) angeordnet ist und mit dem Ventilhalter (3) eine bei Druckbeaufschlagung öffenbare Ventileinrichtung (16) zur Abdichtung wenigstens eines Innenraums (34, 35) des Akkumulators (30) gegenüber der Umgebung bildet, wobei der Verschlussstopfen (4) wenigstens ein Befestigungsmittel (7) zur Befestigung an der Befüllungs- und Entgasungsöffnung (31) aufweist und zugleich das Ventilteil (2) gegenüber dem Ventilhalter (3) mit einer Vorspannkraft beaufschlagt, **dadurch gekennzeichnet, dass** der Ventilhalter (3) an einer zu dem Ventilteil (2) weisenden Fläche (5) wenigstens einen als umlaufende Dichtkante ausgebildeten, in Axialrichtung zum Ventilteil (2) hin hervorstehenden Fortsatz (6) aufweist, auf dem das Ventilteil (2) aufliegt.

2. Verschlussstopfenanordnung nach Anspruch 1, **dadurch gekennzeichnet, dass** das Ventilteil (2) in dem Anlagebereich (22), in dem es am Ventilhalter (3) anliegt, keine axial hervorstehende Dichtlippe aufweist.

3. Verschlussstopfenanordnung nach einem der vorhergehenden Ansprüche, **dadurch gekennzeichnet, dass** der Fortsatz (6) aus einem härteren Material gebildet ist als das Material des Ventilteils (2).

4. Verschlussstopfenanordnung nach einem der vorhergehenden Ansprüche, **dadurch gekennzeichnet, dass** das Ventilteil (2) einen Fortsatz aufweist, der in einem inneren Hohlraum (17) des Ventilhalters (3) angeordnet ist und als Halteabschnitt (24) zum Halten des Ventilteils (2) in bzw. an dem Ventilhalter (3) fungiert.

5. Verschlussstopfenanordnung nach Anspruch 4, **dadurch gekennzeichnet, dass** der Innendurchmesser des Ventilhalters (3) zumindest in dem hohlen Bereich (17), der zur Aufnahme des Halteabschnitts (24) des Ventilteils (2) ausgebildet ist, größer ist als der Außendurchmessers des Halteabschnitts (24).

6. Verschlussstopfenanordnung nach Anspruch 4 oder 5, **dadurch gekennzeichnet, dass** das Ventilteil (2) einen Kragen (21) aufweist, der einen Anschlag beim Einsetzen des Ventilteils (2) in den Ventilhalter (3) bildet.

7. Verschlussstopfenanordnung nach einem der vorhergehenden Ansprüche, **dadurch gekennzeichnet, dass** der Verschlussstopfen (4) eine innere Kammer (40) zur Aufnahme des Ventilteils (2) und des Ventilhalters (3) aufweist.

8. Verschlussstopfenanordnung nach einem der vorhergehenden Ansprüche, **dadurch gekennzeichnet, dass** der Verschlussstopfen (4) an seinem von der Anordnung aus Ventilteil (2) und Ventilhalter (3) abgewandten Endbereich eine Wand (8) aufweist, die den Innenraum (34, 35) des Akkumulators (30) zur Umgebung hin abdichtet, wenn die Verschlussstopfenanordnung (1) in die Befüllungs- und Entgasungsöffnung (31) eingesetzt ist.

9. Gehäuse eines Akkumulators (30) mit einem kastenförmigen Gehäuseunterteil (33) und einem als Deckel des Gehäuses dienenden, auf das Gehäuseunterteil (33) aufsetzbaren oder aufgesetzten Gehäuseoberteil (32), wobei das Gehäuseoberteil (32) wenigstens eine kombinierte Befüllungs- und Entgasungsöffnung (31) des Akkumulators (30) aufweist, die mit einer Verschlussstopfenanordnung (1) nach wenigstens einem der vorhergehenden Ansprüche verschlossen ist.

10. Gehäuse nach Anspruch 9, **dadurch gekennzeichnet, dass** das Gehäuseoberteil (32) wenigstens einen in dem Gehäuseoberteil (32) zu wenigstens einer Gasauslassöffnung des Gehäuses verlaufenden Entgasungskanal (36) aufweist, wobei die Gasauslassöffnung von der kombinierten Befüllungs- und Entgasungsöffnung (31) beabstandet ist.

11. Akkumulator mit einem Gehäuse nach einem der Ansprüche 9 oder 10.

## Claims

1. A sealing plug arrangement (1) for sealing a combined filling and degassing opening (31) of an accumulator (30), wherein the sealing plug arrangement (1) comprises at least one valve part (2), valve holder (3) and sealing plug (4), wherein the valve part (2) is arranged on the valve holder (3) and, together with the valve holder (3), forms a valve mechanism (16) for sealing at least one internal space (34, 35) of the accumulator (30) from the surrounding area which is able to open upon pressure being applied, wherein the sealing plug (4) comprises at least one fixing means (7) for attaching to the filling and degassing opening (31) and at the same time subjecting the valve part (2) to a pretensioning force toward the valve holder (3), **characterized in that** the valve holder (3) comprises at least one projection (6) on a surface (5) facing the valve part (2) formed as a circumferential sealing edge axially projecting toward the valve part (2) on which the valve part (2) rests.

2. The sealing plug arrangement according to claim 1, **characterized in that** the valve part (2) has no axially projecting sealing lip in the contact area (22) by which it rests on the valve holder (3).

3. The sealing plug arrangement according to one of the preceding claims, **characterized in that** the projection (6) is formed from a harder material than the material of the valve part (2).

4. The sealing plug arrangement according to one of the preceding claims, **characterized in that** the valve part (2) comprises a projection arranged in an inner cavity (17) of the valve holder (3) and functioning as a retaining section (24) for holding the valve part (2) in or on the valve holder (3).

5. The sealing plug arrangement according to claim 4, **characterized in that** the internal diameter of the valve holder (3) is larger than the external diameter of the retaining section (24) at least in the hollow area (17) formed to receive the retaining section (24) of the valve part (2).

6. The sealing plug arrangement according to claim 4 or 5, **characterized in that** the valve part (2) comprises a collar (21) which forms a stop when the valve part (2) is inserted into the valve holder (3).

7. The sealing plug arrangement according to one of the preceding claims, **characterized in that** the sealing plug (4) comprises an inner chamber (40) for receiving the valve part (2) and the valve holder (3).

8. The sealing plug arrangement according to one of the preceding claims, **characterized in that** the sealing plug (4) comprises a wall (8) at its end region opposite from the arrangement of valve part (2) and valve holder (3) which seals the internal space (34, 35) of the accumulator (30) from the surrounding area when the sealing plug arrangement (1) is inserted into the filling and degassing opening (31).

9. A housing of an accumulator (30) having a box-shaped lower housing part (33) and an upper housing part (32) serving as a cover for the housing which can be or is set onto the lower housing part (33), wherein the upper housing part (32) comprises at least one combined filling and degassing opening (31) of the accumulator (30) sealed by a sealing plug arrangement (1) in accordance with at least one of the preceding claims.

10. The housing according to claim 9, **characterized in that** the upper housing part (32) comprises at least one degassing channel (36) extending within the upper housing part (32) to at least one gas outlet opening of the housing, wherein the gas outlet opening is spaced at a distance from the combined filling and degassing opening (31).

11. An accumulator having a housing in accordance with one of claims 9 or 10.

## Revendications

1. Agencement formant bouchon d'obturation (1) pour obturer une ouverture combinée de remplissage et de dégazage (31) d'un accumulateur (30), dans lequel l'agencement formant bouchon d'obturation (1) comprend au moins une partie formant valve (2), un porte-valve (3) et un bouchon d'obturation (4), dans lequel la partie formant valve (2) est agencée sur le porte-valve (3) et forme avec le porte-valve (3) un système de valve (16), susceptible d'être ouvert sous l'application d'une pression, pour étancher au moins un volume intérieur (34, 35) de l'accumulateur (30) par rapport à l'environnement, dans lequel le bouchon d'obturation (4) comprend au moins un moyen de fixation (7) pour la fixation sur l'ouverture de remplissage et de dégazage (31) et sollicite simultanément la partie formant valve (2) avec une force de précontrainte par rapport au porte-valve (3),
**caractérisé en ce que** le porte-valve (3) comprend, sur une surface (5) tournée vers la partie formant valve (2), au moins un prolongement, réalisé sous la forme d'une arête d'étanchéité périphérique et dépassant en direction axiale vers la partie formant valve (2), prolongement sur lequel repose la partie formant valve (2).

2. Agencement formant bouchon d'obturation selon la revendication 1, **caractérisé en ce que** la partie formant valve (2), dans la zone de contact (22) dans laquelle elle est en contact contre le porte-valve (3), ne comporte aucune lèvre d'étanchéité en saillie axiale.

3. Agencement formant bouchon d'obturation selon l'une des revendications précédentes, **caractérisé en ce que** le prolongement (6) est réalisé en un matériau plus dur que le matériau de la partie formant valve (2).

4. Agencement formant bouchon d'obturation selon l'une des revendications précédentes, **caractérisé en ce que** la partie formant valve (2) comprend un prolongement qui est agencé dans une cavité intérieure (17) du porte-valve (3) et qui fait office de portion de maintien (24) pour maintenir la partie formant valve (2) dans ou sur le porte-valve (3).

5. Agencement formant bouchon d'obturation selon la revendication 4, **caractérisé en ce que** le diamètre intérieur du porte-valve (3), au moins dans la zone creuse (17) qui est réalisée pour recevoir la portion de maintien (24) de la partie formant valve (2), est plus grand que le diamètre extérieur de la portion de maintien (24).

6. Agencement formant bouchon d'obturation selon la revendication 4 ou 5, **caractérisé en ce que** la partie formant valve (2) comporte une collerette (21) qui forme une butée lors de la mise en place de la partie formant valve (2) dans le porte-valve (3).

7. Agencement formant bouchon d'obturation selon l'une des revendications précédentes, **caractérisé en ce que** le bouchon d'obturation (4) comporte une chambre intérieure (40) pour la réception de la partie formant valve (2) et du porte-valve (3).

8. Agencement formant bouchon d'obturation selon l'une des revendications précédentes, **caractérisé en ce que** le bouchon d'obturation (4) comporte, au niveau de sa zone terminale détournée de l'agencement constitué de la partie formant valve (2) et du porte-valve (3), une paroi (8) qui étanche le volume intérieur (34, 35) de l'accumulateur (30) vis-à-vis de l'environnement, quand l'agencement formant bouchon d'obturation (1) est mis en place dans l'ouverture de remplissage et de dégazage (31).

9. Boîtier d'accumulateur (30) comprenant une partie inférieure de boîtier (33) en forme de caisse et une partie supérieure de boîtier (32) servant de couvercle et posée ou susceptible d'être posée sur la partie inférieure de boîtier (33), dans lequel la partie supérieure de boîtier (32) comporte au moins une ouverture combinée de remplissage et de dégazage (31) de l'accumulateur (30), ouverture qui est obturée avec un agencement formant bouchon d'obturation (1) selon l'une au moins des revendications précédentes.

10. Boîtier selon la revendication 9, **caractérisé en ce que** la partie supérieure de boîtier (32) comporte au moins un canal de dégazage (36) qui s'étend dans la partie supérieure de boîtier (32) jusqu'à au moins une ouverture de sortie de gaz du boîtier, dans lequel l'ouverture de sortie de gaz est à distance de l'ouverture combinée de remplissage et de dégazage (31).

11. Accumulateur comportant un boîtier selon l'une des revendications 9 ou 10.
